(19) Europäisches Patentamt
European Patent Office
Office européen des brevets

(11) **EP 0 196 857 B1**

(12) **EUROPEAN PATENT SPECIFICATION**

(45) Date of publication and mention
of the grant of the patent:
**06.11.1996 Bulletin 1996/45**

(51) Int Cl.6: **H01F 27/28**, H01F 38/42

(21) Application number: **86302176.2**

(22) Date of filing: **25.03.1986**

(54) **Transformer winding arrangement especially for video display**

Transformatorwicklungsanordnung, insbesondere für Videoanzeige

Dispositif d'enroulement de transformateur, en particulier pour l'affichage vidéo

(84) Designated Contracting States:
**AT DE FR GB IT SE**

(30) Priority: **29.03.1985 US 717805**

(43) Date of publication of application:
**08.10.1986 Bulletin 1986/41**

(73) Proprietor: **RCA Thomson Licensing Corporation Princeton New Jersey 08540 (US)**

(72) Inventor: **Nero, Leroy William Indianapolis Indiana 46250 (US)**

(74) Representative: **Ahrens, Thomas et al Deutsche Thomson-Brandt GmbH, Patent Department, Göttinger Chaussee 76 30453 Hannover (DE)**

(56) References cited:
**DE-A- 1 538 046        FR-A- 2 404 358**
**US-A- 3 813 574        US-A- 4 247 889**

• **PATENT ABSTRACTS OF JAPAN, vol. 5, no. 11 (E-42)[683], 23rd January 1981; & JP-A-55 141714 (Hitachi Seisakusho K.K.) 05-11-1980**

## Description

This invention relates to winding of transformer coiis, and in particular, to winding techniques for transformers having high voltage stresses such as can occur in television or other video display apparatus.

FR-A-2,404,358 discloses a high voltage transformer comprising: a tertiary coil form having a tertiary, high voltage, winding wound thereon; a magnetically permeable core disposed within the interior of said tertiary coil form; and disposed between said tertiary coil form and said core a primary winding assembly comprising: a primary coil form; a primary winding wound on said primary coil form over a predetermined winding region; and at least one additional winding wound on said primary coil form and overlaying said primary winding.

A high voltage transformer for a video display apparatus, such as a television receiver or a computer monitor, commonly comprises one or more primary or auxiliary coils wound on a bobbin or coil form. A second bobbin surrounds the primary winding bobbin and receives tertiary windings which produce a voltage or anode potential for a cathode ray tube.

During operation of the transformer, voltage potentials are generated across each of the windings on the primary winding bobbin. The difference between the voltage potentials across different windings creates voltage stresses between the windings so that insulating material, such as mylar, is required to be placed between winding layers on the bobbin. The placement of the individual turns of the auxiliary coils with respect to the primary winding may result in localized voltage stresses between the windings that are undesirably high, particularly when the auxiliary windings are heavily loaded, such as when the high voltage transformer is used with a resonant retrace deflection circuit. Additionally, loading of the primary winding by the auxiliary windings affects the loading of the tertiary winding by the primary winding which in turn may influence the harmonic tuning of the transformer. Tuning of the transformer can influence the high voltage level and the high voltage circuit output impedance. If the spatial relationship of the windings is not carefully controlled, additional transformer tuning components may be required to obtain the desired operating characteristics for the transformer.

In accordance with the present invention, there is provided a high voltage transformer comprising: a tertiary coil form having a tertiary, high voltage, winding wound thereon; a magnetically permeable core disposed within the interior of said tertiary coil form; and disposed between said tertiary coil form and said core a primary winding assembly comprising: a primary coil form; a primary winding wound on said primary coil form over a predetermined winding region; and at least one additional winding wound on said primary coil form and overlaying said primary winding, characterized in that said primary winding and said additional winding each comprise a plurality of winding turns evenly distributed over said predetermined winding region.

In the accompanying drawing:

FIGURE 1 is a schematic and block diagram of a portion of a video display apparatus;

FIGURE 2 is a cross-sectional view of a transformer bobbin and coil assembly constructed in accordance with the present invention;

FIGURE 3 is a cross-sectional view of a high voltage transformer constructed in accordance with the present invention; and

FIGURE 4 is a cross-sectional view of a wire such as that used to wind the transformer windings shown in FIGURE 3.

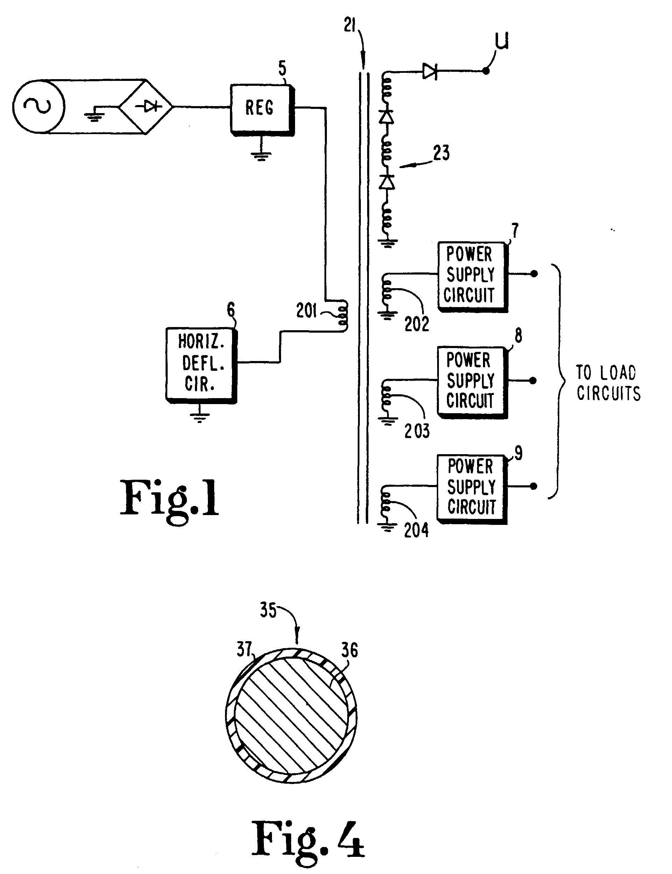

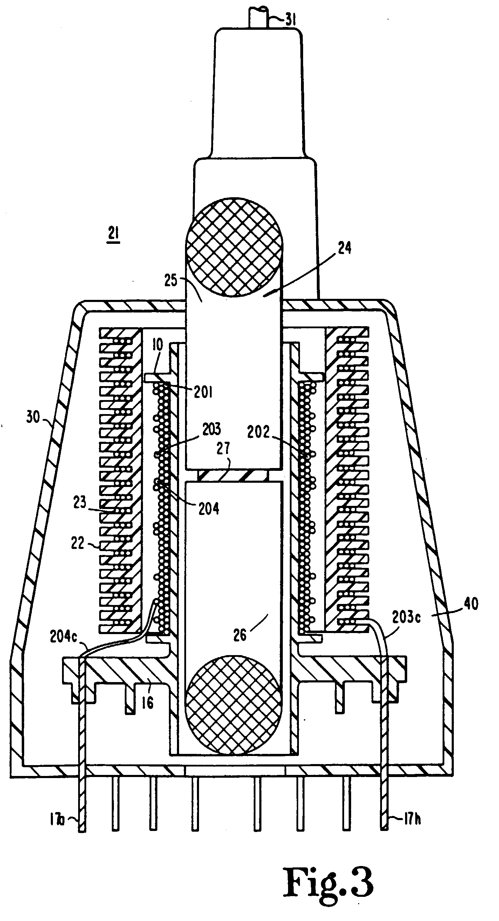

FIGURE 1 illustrates in schematic form a portion of a video display apparatus in which an unregulated DC voltage is applied to regulator circuit 5, which may illustratively be of an SCR type or a switching-type regulator, to produce a regulated B+ voltage that is applied to one terminal of a primary winding 201 of high voltage transformer 21. The other terminal of primary winding 201 is coupled to a horizontal deflection circuit 6 which may illustratively be of the resonant retrace type. High voltage transformer 21 produces, via high voltage or tertiary winding 23, a high voltage level at a terminal U, which is applied to the ultor or anode terminal of a cathode ray tube (not shown). Transformer 21 is illustratively of the type that produces a plurality of supply voltages for some of the other load circuits (not shown) of the video display apparatus. Auxiliary transformer windings 202, 203 and 204, along with power supply circuits 7, 8 and 9, respectively, generate the desired voltage levels for their associated load circuits. The construction of transformer 21 will be explained in greater detail later in conjunction with the description of FIGURE 3.

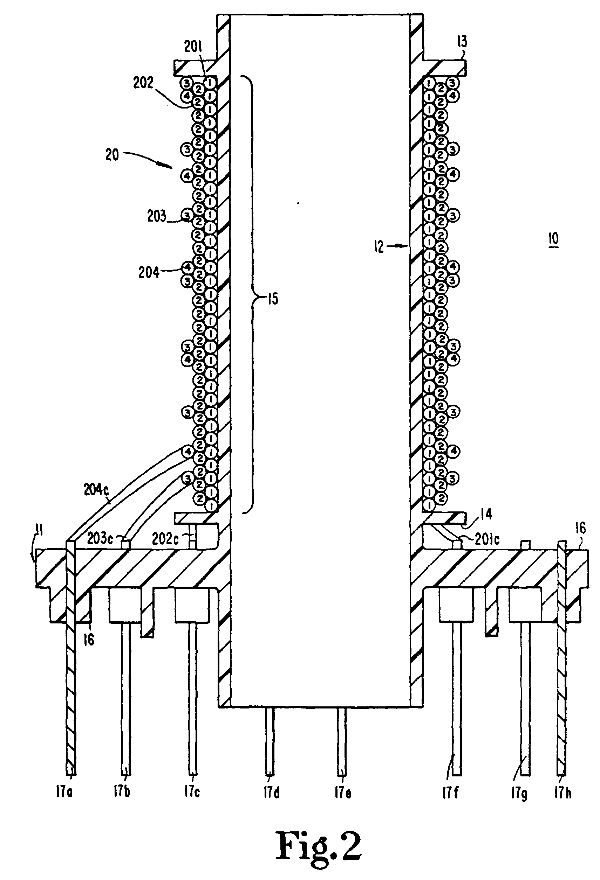

FIGURE 2 shows a transformer winding coil form or bobbin 10, illustratively made of a plastic material, such as plastics sold under the names of Noryl or Valox. Bobbin or coil form 10 comprises a base 11 and a cylindrical body 12 about which transformer windings are wound. Bobbin 10 also incorporates an upper winding stop 13 and a lower winding stop 14 which contain the transformer windings within a winding region 15. Base 11 incorporates a plurality of radial elements 16, each of which illustratively incorporates an electrical terminal, designated 17a-17h. The interior of bobbin 10 is shaped to receive a magnetically permeable core (not shown).

A plurality of transformer windings 20 are shown wound on bobbin 10. Each winding will comprise a plurality of wire turns having two terminals for coupling the winding to a load circuit. One terminal is coupled to respective ones of bobbin terminals 17a-17h. The wire turns that comprise each of the windings on bobbin 10 are shown in an exaggerated manner for illustrative purposes. The actual number of turns in each winding is determined using conventional transformer design criteria. Each of the transformer windings 20 is wound in layer fashion within winding region 15 on bobbin 10. The individual windings may each comprise one or more layers of wire turns, but in the assembly shown in FIGURE 1, each winding is illustratively comprised of only one layer of wire turns for simplicity. Additional windings may also be wound on bobbin 10.

The wire turns that are designated in FIGURE 2 by the identifying numeral "1" comprise the wire turns of primary winding 201. The wire turns that are designated in FIGURE 2 by the identifying numerals "2", "3" and "4" comprises the wire turns of auxiliary windings 202, 203 and 204, respectively. Windings 201, 202, 203 and 204 are respectively connected to terminals 17f, 17c, 17b and 17a via conductors 201c, 202c, 203c and 204C. In accordance with a feature of the present invention, primary winding 201 and auxiliary windings 202, 203 and 204 are uniformly distributed over the winding region 15, such that the spacing between individual wire turns is substantially constant for a given winding. In FIGURE 2, each of windings 202, 203 and 204 extend over the complete traverse (i.e., winding region 15) of the primary winding 201. Tnis permits a uniform or constant degree of magnetic coupling between each of windings 202, 203 and 204 and primary winding 201 over the entire length of the windings. This causes the primary winding 201 to be uniformly loaded by each of windings 202, 203 and 204. When bobbin 10 comprises a portion of a television receiver or video monitor high voltage transformer, as shown in FIGURE 3, uniform loading of the primary winding by the auxiliary windings results in uniform loading of the tertiary or high voltge winding 23 by the primary winding 201, since energization of the auxiliary windings loads the primary winding,which is reflected to the tertiary winding 23. A constant network resonance from the primary winding to each coil of the transformer tertiary winding is maintained, which advantageously permits the tuning of the tertiary winding to a single harmonic pole, which may illustratively be a high harmonic of the order of the ninth harmonic or above.

According to a preferred feature of the present invention, each of the windings 202, 203 and 204 overlay the previous windings directly, without the placement of any insulating material between the winding layers. FIGURE 4 illustrates a typical insulated wire 35, which may be used to wind any of windings 201, 202, 203 or 204. Wire 35 comprises a conductive wire core 36 surrounded by an insulating jacket or coating 37. Because of the high AC voltage stress between wire turns of different windings, it is important that the thickness and electrical property requirements of insulating jacket 37 be carefully determined. Using wire that has more insulation than is necessary increases the size and cost of the transformer, and may degrade coupling between windings. Too little insulation increases the chance of arcing and transformer failure.

An analysis of the wire insulation on a molecular level yields information with respect to voltage stress tolerance and the length of time before the insulation fails.

The coupling energy between molecules of a material is a function of the material composition and the process used in its formation. There can be one or more coupling poles between molecules, each containing a discrete amount of coupling energy. The molecules of the wire insulation have all of their coupling poles coupled, making for very high resistance.

There are stresses, however, that are placed upon the molecular bonds of the insulator during each period of AC field change. These stresses reduce the coupling energy during each stress cycle. The greater the voltage stress, the greater amount of coupling energy lost during each AC cycle. This eventually causes the coupling bond on the molecules to break. At this time the molecules become sources, as in a conductor, being able to pass electric current continuously at some resistance level. An analysis of this voltage stress-induced bond breakdown reaction for transformer wire insulation yields the relationship:

$$t_f = \frac{K}{(s)\left(e^{5.4366}\right)\left(T^{-29.5562}\right)}$$

where

$t_f$   is the insulation time to failure in hours;
K   is a constant determined from insulation property data supplied by the wire manufacturer;
s   is a function of the AC voltage waveform, that for a waveform having an unbalanced duty cycle, such as the flyback pulse voltage, is substantially equal to unity;
e   is the applied voltage value in Vrms/mil; and
T   is the operating temperature in Kelvin.

Using the previously described analysis, it is possible to determine, for a given wire gauge, the optimum wire insulation characteristics, such as thickness and type of material necessary to insure reliable transformer operation. By using the analysis, it is possible to wind the transformer windings without the placement of insulating sheets, such as Mylar, between the individual winding layers, while maintaining reliable operation without significant risk of transformer failure. The omission of the insulation between layers of windings improves magnetic coupling between windings which improves power transfer and load circuit output impedance characteristics.

A transformer 21, embodying the previously described winding techniques, is shown in FIGURE 3. Transformer 21 comprises bobbin 10 having windings 201, 202, 203 and 204 wound thereon. Surrounding bobbin 10 is a tertiary winding bobbin 22, upon which is wound the high voltage or tertiary winding 23. A magnetically permeable core 24, comprising upper and lower core segments 25 and 26, with an intermediate core spacer 27, is disposed within the interior of bobbin 10.

The winding assemblies are disposed within a transformer housing 30 and are desirably potted within housing 30 with an epoxy compound 40. A high voltage or anode lead 31 is coupled to the high voltage end of tertiary winding 23 and supplies the high voltage level to the anode terminal of a cathode ray tube (not shown).

The previously described transformer therefore incorporates advantageous winding techniques in which subsequent winding layers on the primary winding bobbin are wound directly over previous layers without intermediate layers of insulation,which optimizes power transfer and output impedance characteristics. The winding turns of the auxiliary windings are distributed evenly over the full traverse of the primary winding, which permits tuning of the transformer to a single harmonic, for example a high harmonic such as the ninth harmonic. These techniques therefore simplify tuning of the transformer, provide a reliable assembly, and aid in reducing the size and cost of the transformer.

## Claims

1. A high voltage transformer (21) comprising:

   a tertiary coil form (22) having a tertiary, high voltage, winding (23) wound thereon;
   a magnetically permeable core (24) disposed within the interior of said tertiary coil form (22); and
   disposed between said tertiary coil form (22) and said core (24) a primary winding assembly comprising:
   a primary coil form (10);
   a primary winding (201) wound on said primary coil form (10) over a predetermined winding region (15); and
   at least one additional winding (202) wound on said primary coil form (10) and overlaying said primary winding (201), characterized in that said primary winding (201) and said additional winding (202) each comprise a plurality of winding turns (1,2) evenly distributed over said predetermined winding region (15).

2. A transformer as defined in claim 1 designed for connection of a said additional winding (202) to a load circuit (7) which will heavily load said additional winding (202), said even distribution of said additional winding (202) preventing degradation of the harmonic tuning of said transformer (21) due to said heavy loading of additional winding (202).

3. A transformer as defined in claim 1 or 2 wherein said additional winding (202) is wound directly over said primary winding (201), without any insulation between said primary winding (201) and said additional winding (202) other than insulating coating (37) on the wire of the windings (201,202).

4. A transformer as defined in claim 2 or 3 wherein said transformer (21) is tuned to a single harmonic pole.

5. A transformer as defined in claim 4, wherein said signal harmonic pole is a high harmonic of the order of the ninth or greater harmonic.

6. A transformer as defined in any preceding claim wherein one said additional winding (203) has a plurality of winding turns (3) interleaved with the winding turns (4) of another said additional winding (204) said the winding turns (3) of said one additional winding (203) and the winding turns (4) of said other additional winding (204) being evenly distributed independent of any other of said additional windings.

## Patentansprüche

1. Hochspannungs-Transformator (21), enthaltend

   - eine Tertiär-Spulenform (22) mit einer Tertiär-Hoehspannungswicklung (23), die drauf gewickelt ist;
   - einen magnetisch permeablen Kern (24), der im Inneren der Tertiär-Spulenform (22) angeordnet ist; und
   - einen Primär-Wicklungsaufbau zwischen der Tertiär-Spulenform (22) und dem Kern (24), welcher Wicklungsaufbau enthält:
   - eine Primär-Spulenform (10);
   - eine Primär-Wicklung (201), die auf die Primär-Spulenform (10) über einen vorbestimmten Wicklungsbereich oder -region (15) gewickelt ist; und
   - zumindest eine zusätzliche Wicklung (202), die auf die Primär-Spulenform (10) gewickelt ist und die Primär-Wicklung (201) überlagert, **dadurch gekennzeichnet**, daß die Primär-Wicklung (201) und die zusätzliche Wicklung (202) jeweils mehrere Windungen (1,2) enthalten, die über die vorbestimmte Wicklungsregion oder -bereich (15) gleich oder gleichmäßig verteilt ist.

2. Transformator nach Anspruch 1, ausgestaltet zur Verbindung (einer) der zusätzlichen Wicklung (202) zu einer Lastschaltung (7), welche die zusätzliche Wicklung (202) stark belasten wird, wobei die gleichmäßige Verteilung der zusätzlichen Wicklung (202) die Verschlechterung der harmonischen Abstimmung des Transformators (21) aufgrund der starken Belastung der zusätzlichen Wicklung (202) verhindert oder vermeidet.

3. Transformator nach Anspruch 1 oder 2, bei der die zusätzliche Wicklung (202) direkt über die Primär-Wicklung (201) ohne jede Isolation zwischen der Primär-Wicklung (201) und der zusätzlichen Wicklung (202) - mit Ausnahme der Isolierschicht (37) auf dem Draht der Wicklungen (201,202) - gewickelt ist.

4. Transformator nach Anspruch 2 oder 3, bei dem der Transformator (21) auf einen einzelnen harmonischen Pol abgestimmt ist.

5. Transformator nach Anspruch 4, bei dem der signal-harmonische Pol (der einzige harmonische Pol) eine hohe Harmonische der Größenordnung der neunten oder größeren Harmonischen ist.

6. Transformator nach einem der vorhergehenden Ansprüche, bei dem die zusätzliche Wicklung (203) mehrere Schleifen oder Wicklungen (3) hat, die mit den Wicklungen oder Schleifen (4) einer anderen (der) zusätzlichen Wicklung (204) verschachtelt sind, wobei die Wicklungen (3) der einen zusätzlichen Wicklung (203) und die Wicklungen (4) der anderen zusätzlichen Wicklung (204) gleichmäßig verteilt sind, unabhängig von anderen (der) zusätzlichen Wicklungen.

**Revendications**

1. Transformateur haute tension (21) intégrant :

   une armature de bobine de champ tertiaire (22) sur laquelle est enroulé un enroulement tertiaire haute tension (23) ;
   un noyau magnétiquement perméable (24) intégré dans la dite armature de bobine de champ tertiaire (22) et
   intercalé dans ladite armature de bobine de champ tertiaire (22) et ledit noyau (24), un ensemble d'enroulement primaire intégrant:
   une armature de bobine de champ primaire (10) ;
   un enroulement primaire (201) enroulé sur ladite armature de bobine de champ primaire (10) dans les limites d'une zone d'enroulement prédéfinie (15) et
   au moins un enroulement supplémentaire (202) enroulé sur ladite armature de bobine de champ primaire (10) et recouvrant ledit enroulement primaire (201), caractérisé en ce que ledit enroulement primaire (201) et ledit enroulement supplémentaire (202) intègrent tous deux un ensemble de spires (1, 2) uniformément réparties sur ladite zone d'enroulement prédéfinie (15).

2. Transformateur conforme à la Revendication 1 destiné à la connexion dudit enroulement supplémentaire (202) sur un circuit de charge (7) qui chargera de manière significative ledit enroulement supplémentaire (202), ladite répartition uniforme dudit enroulement supplémentaire empêchant une dégradation de la syntonisation harmonique dudit transformateur en raison dudit fort chargement de l'enroulement supplémentaire (202).

3. Transformateur conforme à la Revendication 1 ou 2 où ledit enroulement supplémentaire (202) est directement enroulé sur ledit enroulement primaire (201) sans isolation entre ledit enroulement primaire (201) et ledit enroulement supplémentaire (202) autre que le revêtement isolant (37) sur le conducteur des enroulements (201, 202).

4. Transformateur conforme à la Revendication 2 ou 3, où ledit transformateur (21) est syntonisé sur un pôle harmonique unique.

5. Transformateur conforme à la Revendication 4, où ledit pôle harmonique des signaux est un harmonique élevé de l'ordre du neuvième harmonique ou au-delà.

6. Transformateur conforme à l'une des quelconques revendications précédentes où ledit enroulement supplémentaire (203) présente un ensemble de spires (3) imbriquées dans les spires de l'enroulement (4) d'un autre enroulement supplémentaire (204), lesdites spires d'enroulement (3) dudit enroulement supplémentaire (203) et les spires (4) dudit autre enroulement supplémentaire (204) étant uniformément réparties indépendamment de tout autre desdits enroulements supplémentaires.

Fig.1

Fig.4

# Fig.2

**Fig.3**